**Europäisches Patentamt**

**European Patent Office**

**Office européen des brevets**

(11) Veröffentlichungsnummer: **0 212 241**
A2

(12) # EUROPÄISCHE PATENTANMELDUNG

(21) Anmeldenummer: 86109619.6

(51) Int. Cl.⁴: **G 01 N 21/73, G 01 N 1/00**

(22) Anmeldetag: 14.07.86

(30) Priorität: 13.07.85 DE 3525166

(43) Veröffentlichungstag der Anmeldung: 04.03.87 Patentblatt 87/10

(84) Benannte Vertragsstaaten: AT BE CH DE FR GB IT LI LU NL SE

(71) Anmelder: **Bodenseewerk Perkin-Elmer & Co. GmbH, Alte Nussdorfer Strasse 15 Postfach 1120, D-7770 Überlingen/Bodensee (DE)**

(72) Erfinder: **Huber, Bernhard, Hildegardring 42, D-7770 Überlingen (DE)**

(74) Vertreter: **Weisse, Jürgen, Dipl.-Phys. et al, Patentanwälte Dipl.-Phys. Jürgen Weisse Dipl.-Chem. Dr. Rudolf Wolgast Bökenbusch 41 Postfach 11 03 86, D-5620 Velbert 11 Langenberg (DE)**

(54) Vorrichtung zur Zufuhr einer Probe zu einem Plasma-Emissionsgerät.

(57) Eine Probenpumpe (20), eine Reagenzpumpe (32) und eine Lösungsmittelpumpe (78) sind als Kolbenpumpen ausgebildet und werden von Antriebsmotoren (66, 72 bzw. 94) angetrieben. Sie fördern in einer Richtung jeweils in eine Mischkammer (18), die mit einem Reaktionsgefäß (44) in Verbindung steht. Gebildete flüchtige Hydride können über einen Anschluß (60) wahlweise auf ein Plasma-Emissionsgerät oder eine beheizte Meßküvette für die Atomabsorptions-Spektroskopie geleitet werden. Über eine Ventilanordnung (96) und einen Anschluß (98) kann Probe auch unmittelbar auf einen Zerstäuber des Plasma-Emissionsgerätes gegeben werden. Die Kolbenpumpen (20, 32, 78) gestatten wahlweise einen schubweisen Betrieb, bei welchem Probe und Reagenz schnell zusammengebracht werden, oder aber einen kontinuierlichen Betrieb, wobei sich die Pumpenkolben (64 und 70) und gegebenenfalls (92) relativ langsam vorbewegen und kontinuierliche Flüssigkeitsströme erzeugen.

# Vorrichtung zur Zufuhr einer Probe zu einem Plasma-Emissionsgerät

Die Erfindung betrifft eine Vorrichtung zur Zufuhr einer Probe zu einem Plasma-Emissionsgerät, enthaltend

(a)   einen Probeneinlaß,

(b)   einen Reagenzvorratsbehälter,

(c)   eine Mischkammer,

(d)   eine Probenpumpe mit einem Einlaß, der mit dem Probeneinlaß verbunden ist, und mit einem Auslaß, der mit der Mischkammer verbunden ist,

(e)   eine Reagenzpumpe mit einem Einlaß, der mit dem Reagenzvorratsbehälter verbunden ist, und einem Auslaß, der ebenfalls mit der Mischkammer verbunden ist, und

(f)   ein Reaktionsgefäß, das mit der Mischkammer in Verbindung steht, in das ein Schutzgasstrom einleitbar ist und das einen Ausgangsanschluß zur Verbindung mit dem Plasma-Emissionsgerät aufweist.

Zur Erzeugung einer "Atomwolke" zur Bestimmung der Menge eines gesuchten Elements in einer Probe bei der Atomabsorptions-Spektroskopie ist es bekannt, eine Probenlösung mit einem Reagenz, z.B. Natriumborhydrid zu versetzen, so daß bestimmte in der Probe enthaltene Elemente wie Arsen oder Selen flüchtige Hydride bilden. Diese flüchtigen Hydride treten als Gas aus der Probenflüssigkeit aus und werden von einem Inertgas in eine beheizte Meßküvette geleitet. In der beheizten Meßküvette zersetzen sich die Hydride, so daß das hydridbildende Element in der Meßküvette in atomarem Zustand auftritt. Die Menge des gesuchten Elements wird dann in üblicher Weise durch Atomabsorptions-Spektroskopie bestimmt.

Üblicherweise geschieht diese Messung von hydridbildenden Elementen in der Form, daß in ein Reaktionsgefäß eine bestimmte Menge von Probenflüssigkeit eingebracht wird. Diese Menge von Probenflüssigkeit wird mit einer entsprechenden Menge von Reagenz versetzt und vermischt. Die Hydride entsprechend dem Anteil hydridbildender Atome in der Probe werden dabei sehr schnell gebildet. Das Atomabsorptions-Spektrometer liefert ein bandenartiges Signal. Man bezeichnet dies als "Batch-Sampling".

Es ist weiterhin bekannt, die Menge eines gesuchten Elements in einer Probe durch Messung der Plasma-Emission zu bestimmen. Zu diesem Zweck wird mittels eines Plasma-Emissionsgeräts ein Plasma erzeugt, also ein ionisiertes Edelgas mit hoher Temperatur. In dieses Plasma wird die Probe eingeleitet. Die verschiedenen Atome in der Probe emittieren ein Linienspektrum. Dieses Linienspektrum kann vermessen werden, wobei aus der Intensität der verschiedenen, für die einzelnen Elemente charakteristischen Linien auf den Anteil des betreffenden Elements in der Probe geschlossen werden kann. Im Gegensatz zu der Atomabsorptions-Spektroskopie bietet eine Messung der Plasma-Emission den Vorteil, daß gleichzeitig mehrere Elemente bestimmt werden können.

Es ist auch bekannt, eine Messung der Plasma-Emission zu kombinieren mit dem vorstehend bekannten Verfahren, hydridbildende Elemente wie Arsen durch Zusatz eines Reagenz aus einer flüssigen Probe auszutreiben. Es werden dann die flüchtigen Hydride in das Plasma eingeleitet. Dabei erfolgt allerdings die Messung kontinuierlich (Continous-Flow), d.h. die Probengase werden über einen längeren Zeitraum gleichmäßig in das Plasma geleitet. Theoretisch könnten auch bei einer Messung mit Plasma-Emission Einzelproben (Batch-Sampling) verwendet werden. Das hat aber zwei Nachteile: Die Menge des entwickelten Hydrids steigt rasch an und fällt rasch ab, was, wie gesagt, zu einem bandenartigen Signal führt. Es bietet dann Schwierigkeiten, mehrere Elemente nacheinander zu vermessen. Entsprechend ändert sich auch die Wasserstoffentwicklung zeitlich sehr stark. Die Hydridmoleküle zerfallen ja in die Atome des hydridbildenden Elements und Wasserstoff. Diese Wasserstoffentwicklung führt dazu, daß sich die Bedingungen im Plasma während der Messung laufend verändern. Da der Wasserstoff sich nur schwer ionisieren läßt, kann bei einer zu hohen Wasserstoffentwicklung das Plasma sogar verlöschen.

Es ist daher eine Vorrichtung zur Zufuhr einer Probe zu einem Plasma-Emissionsgerät bekannt, bei welcher Probe aus einem Probeneinlaß und Reagenz aus einem Reagenzvorratsbehälter durch je eine Schlauchpumpe ständig in eine Mischkammer gefördert werden und von dieser in ein Reaktionsgefäß fließen. In dem Reaktionsgefäß entwickeln sich flüchtige Hydride. Diese flüchtigen Hydride werden von einem Inertgas (Argon) aus dem Reaktionsgefäß in das Plasma transportiert. Die übrige Proben- und Reagenzflüssigkeit fließt über einen Ablauf in ein Abfallgefäß. Es wird auf diese Weise über einen längeren Zeitraum hinweg ein ständiger konstanter Strom von Hydriden der in der Probe enthaltenen hydridbildenden Elemente dem Plasma-Emissionsgerät zugeführt. Dementsprechend ergibt sich über diesen Zeitraum hinweg eine im wesentlichen konstante Emission der den betreffenden Elementen zugeordneten Spektrallinien.

Eine weitere Schlauchpumpe fördert reines Lösungsmittel. Durch ein Umschaltventil kann wahlweise das reine Lösungsmittel oder die Probe in die Mischkammer geleitet werden. Die jeweils andere Flüssigkeit fließt über das Umschaltventil zu einem Abfallbehälter ab.

Die bekannte Anordnung mit Schlauchpumpen gestattet nur eine relativ ungenaue Dosierung der in die Mischkammer geleiteten Flüssigkeitsströme. Es ist nicht möglich, die Flüssigkeitsströme zu variieren.

5

Es bietet Schwierigkeiten, über einen ausgedehnten Zeitraum hinweg zuverlässige Meßergebnisse zu erhalten.

Der Erfindung liegt die Aufgabe zugrunde, die Genauigkeit, Zuverlässigkeit und Variabilität einer Vorrichtung der eingangs genannten Art zu verbessern.

Der Erfindung liegt die spezielle Aufgabe zugrunde, eine Vorrichtung der eingangs genannten Art so auszubilden, daß sie wahlweise eine schubartige Messung einer Einzelprobe, bei welcher Probe und Reagenz möglichst schnell vollständig zusammengebracht werden, oder eine kontinuierliche Messung über einen längeren Zeitraum hinweg gestattet. Es kann dann mit einem Gerät wahlweise eine Messung durch Atomabsorptions-Spektroskopie eine Messung mit Einzelproben bei erhöhter Empfindlichkeit durchgeführt werden oder mit einem Plasma-Emissionsgerät eine kontinuierliche Messung ggf. mehrerer Elemente.

Erfindungsgemäß wird diese Aufgabe dadurch gelöst, daß

(g) die Probenpumpe und die Reagenzpumpe als in einer Richtung fördernde Kolbenpumpen ausgebildet sind,

(h) die Pumpenkolben der Kolbenpumpen durch Antriebsmotore mit variablen Geschwindigkeiten antreibbar sind,

(i) die Geschwindigkeiten der Antriebsmotore durch ein Betriebsweisensteuergerät steuerbar sind, wobei

($i_1$) bei einer ersten Betriebsweise vorgegebenen Mengen von Probe und Reagenz mit relativ hoher Geschwindigkeit der Pumpenkolben von Proben- und Reagenzpumpe praktisch in einem Schub in die Mischkammer gefördert werden und

($i_2$) bei einer zweiten Betriebsweise die Probe und das Reagenz mit relativ geringer Geschwindigkeit der Pumpenkolben von Proben- und Reagenzpumpe über einen längeren, gegenüber der Reaktionszeit von Probe und Reagenz langen Zeitraum hinweg kontinuierlich in die Mischkammer gefördert werden.

Es werden somit statt der Schlauchpumpen Kolbenpumpen verwendet, die als Ventilpumpen ausgebildet sind und nur in einer Richtung fördern. Die Kolbenpumpen können dabei so bemessen werden, daß bei einem Kolbenhub mit kontinuierlicher Vorbewegung des Pumpenkolbens über einen relativ langen Zeitraum hinweg ein kontinuierlicher Strom der zu pumpenden Flüssigkeit erzeugt wird. Nach jeder dieser kontinuierlichen Messungen kann der Pumpenkolben zurückgefahren und die betreffende Flüssigkeit wieder aus einem Vorratsbehälter bzw. einem Probengefäß angesaugt werden. Die Geschwindigkeit der Pumpenkolben ist daher durch entsprechende Steuerung der Antriebsmotore in weiten Grenzen regelbar und kann an die jeweiligen Erfordernisse angepaßt werden. Insbesondere können aber mit der gleichen Vorrichtung zwei Betriebsweisen wahlweise angewandt werden. Wenn die Pumpenkolben der Probenpumpe und der Reagenzpumpe sehr schnell vorbewegt werden, dann wird praktisch die gesamte abgemessene Menge an Probenflüssigkeit bzw. Reagenz schubartig in das Reaktionsgefäß geleitet. Es tritt eine sehr kurzzeitige aber sehr starke Entwicklung von Hydriden aus der Probenflüssigkeit ein. Das ist das "Batch-Sampling". Es können aber auch die Pumpenkolben beide relativ langsam vorbewegt werden, so daß über einen längeren Zeitraum hinweg kontinuierlich konstante Ströme von Reagenz bzw. Probe in die Mischkammer und von dort in das Reaktionsgefäß geleitet werden. Diese Ströme können mit einer Kolbenpumpe und einem entsprechenden Antrieb sehr genau festgelegt und eingehalten werden, so daß die Meßergebnisse über die gesamte Meßzeit hinweg sehr gut konstant bleiben. Ein einzelner Kolbenhub kann natürlich nur während einer endlichen Zeit einen solchen Strom erzeugen. Es hat sich aber gezeigt, daß mit solchen Kolbenpumpen die erforderlichen Strömungen über die zur Messung benötigte Zeit aufrechterhalten werden können, ohne daß die Pumpen einen Rückhub zu machen brauchen.

Ausgestaltungen der Erfindung sind Gegenstand der Unteransprüche.

Ein Ausführungsbeispiel der Erfindung ist nachstehend unter Bezugnahme auf die zugehörige Zeichnung näher erläutert, die schematisch den Aufbau einer Vorrichtung zur Zufuhr einer Probe zu einem Plasma-Emissionsgerät zeigt.

8

Die Vorrichtung enthält einen Probeneinlaß 10, der beispielsweise mit einem Dosierrohr 12 eines automatischen Probengebers verbunden sein kann. Das Dosierrohr 12 taucht nacheinander in verschiedene Probengefäße 14 ein, die z.B. auf einem Drehtisch angeordnet sind.

Es ist weiterhin ein Reagenzvorratsbehälter 16 vorgesehen. Mit 18 ist eine Mischkammer bezeichnet. Eine Probenpumpe 20 weist einen Einlaß 22 mit einem Einlaßventil 24 und einen Auslaß 26 mit einem Auslaßventil 28 auf. Der Einlaß 22 ist mit dem Probeneinlaß 10 verbunden. Der Auslaß 26 ist über eine Leitung 30 mit der Mischkammer 18 verbunden.

Eine Reagenzpumpe 32 enthält einen Einlaß 34 mit einem Einlaßventil 36 und einen Auslaß 38 mit einem Auslaßventil 40. Der Einlaß 34 der Reagenzpumpe 32 ist mit dem Reagenzvorratsbehälter 16 verbunden. Der Auslaß 38 ist ebenfalls über eine Leitung 42 mit der Mischkammer 18 verbunden.

Mit 44 ist ein Reaktionsgefäß bezeichnet. Das Reaktionsgefäß 44 weist einen trichterförmigen Boden 46 auf, der in einen "Syphon" 48 übergeht. Der Syphon 48 bildet eine Entlüftung 50 und einen Überlauf 52. Das Reaktionsgefäß 44 steht über eine Leitung 54 und eine leitung 56 mit der Mischkammer 18 in Verbindung. Außerdem ist über eine Leitung 58 in das Reaktionsgefäß 44 ein Schutzgasstrom einleitbar. Schließlich weist das Reaktionsgefäß 44 einen Ausgangsanschluß 60 auf, der mit dem Plasma-Emissionsgerät oder auch mit einer beheizten Meßküvette für die Atomabsorptions-Spektroskopie verbunden werden kann.

0212241

Die Probenpumpe ist als eine in einer Richtung fördernde Kolbenpumpe ausgebildet. Sie enthält einen Pumpenzylinder 62, in welchem ein Pumpenkolben 64 gleitet. Der Pumpenkolben 64 ist in bekannter und daher nicht im einzelnen dargestellter Weise durch einen Antriebsmotor, vorzugsweise einen Schrittmotor, 66 mit variabler Geschwindigkeit antreibbar. In entsprechender Weise ist die Reagenzpumpe 32 als in einer Richtung fördernde Kolbenpumpe mit einem Pumpenzylinder und einem Pumpenkolben 70 ausgebildet. Der Pumpenkolben 70 kann durch einen Antriebsmotor 72 ebenfalls mit variabler Geschwindigkeit angetrieben werden.

Die Geschwindigkeiten der Antriebsmotore 66 und 72 sind durch ein Betriebsweisensteuergerät 74 steuerbar. Das Betriebsweisensteuergerät 74 ist eine mikroprozessorgesteuerte Elektronik. Die beiden Antriebsmotore 66 und 72 sind durch das Betriebsweisensteuergerät in zwei Betriebsweisen ansteuerbar:

Bei einer ersten Betriebsweise werden vorgebene Mengen von Probe und Reagenz mit relativ hoher Geschwindigkeit der Pumpenkolben 64 bzw. 70 von Proben- und Reagenzpumpe 20 bzw. 32 praktisch in einem Schub in die Mischkammer 18 und in das Reaktionsgefäß 44 gefördert. Die erste Betriebsweise entspricht also dem "Batch Sampling".

Bei einer zweiten Betriebsweise werden die Probe und das Reagenz mit relativ geringer Geschwindigkeit der Pumpenkolben 64 und 70 von Proben- und Reagenzpumpe 20 bzw. 32 über einen längeren, gegenüber der Reaktionszeit von Probe und Reagenz langen Zeitraum hinweg kontinuierlich in die Mischkammer 18 gefördert. Hierbei erfolgt also eine kontinuierliche, konstante Hydridbildung über einen längeren Zeitraum hinweg, der als Meßzeit ausreicht.

Es ist weiterhin ein Lösungsmittelbehälter 76 zur Aufnahme eines reinen, also die gesuchten Elemente nicht enthaltenden, Lösungsmittels vorgesehen. Eine Lösungsmittelpumpe 78 weist einen Einlaß 80 mit einem Einlaßventil 82 und einen Auslaß 84 mit einem Auslaßventil 86 auf. Der Einlaß 80 der Lösungsmittelpumpe 78 ist mit dem Lösungsmittelbehälter 76 verbunden. Der Auslaß 84 ist über eine Leitung 88 ebenfalls mit der Mischkammer 18 verbunden. Die Lösungsmittelpumpe 78 ist eine nur in einer Richtung fördernde Kolbenpumpe mit einem Pumpenzylinder 90 und einem Pumpenkolben 92. Der Pumpenkolben 92 ist durch einen weiteren Antriebsmotor 94 antreibbar. Der Antriebsmotor 94 ist ebenfalls von dem Betriebsweisensteuergerät 74 gesteuert und treibt den Pumpenkolben 92 mit variabler Geschwindigkeit an.

Diese Anordnung gestattet wieder zwei Betriebsweisen, die durch das Betriebsweisensteuergerät 74 gesteuert werden können:

In einer Betriebsweise ("Nullinie") werden die Antriebsmotore 72 und 94 der Pumpenkolben 70 bzw. 92 von Reagenz- und Lösungsmittelpumpe 32 bzw. 78 zum Antrieb der Pumpenkolben 70,92 mit relativ geringer Geschwindigkeit angesteuert. Es werden so über einen längeren Zeitraum hinweg kontinuierlich Reagenz und Lösungsmittel in die Mischkammer 18 und in das Reaktionsgefäß 44 gefördert. Das reine Lösungsmittel liefert dabei einen Blindwert, durch den die Nullinie der Messung bestimmt werden kann.

In einer anderen Betriebsweise werden die Antriebsmotore der Pumpenkolben 70 bzw. 64 von Reagenz- und Probenpumpe 32 bzw. 20 und ggf. der Lösungsmittelpumpe 78 zum Antrieb der Pumpenkolben 70,64 bzw. 92 mit relativ geringer Geschwindigkeit angesteuert. Dabei ist die Förderrate der Reagenzpumpe 32 die gleiche wie bei der ersteren Betriebsweise. Die Förderrate der Probenpumpe 20 entspricht dem Betrag, um den die Förderrate der Lösungsmittelpumpe 78 gegenüber ihrer Förderrate bei der ersteren Betriebsweise vermindert ist. Dadurch wird über einen längeren Zeitraum hinweg kontinuierlich Reagenz und Probe und ggf. Lösungsmittel in der gleichen Gesamtrate wie bei der ersteren Betriebsweise in die Mischkammer 18 gefördert. Bei der letzteren Betriebsweise kann je nach Erfordernis der Antriebsmotor 94 der Lösungsmittelpumpe 78 vollständig angehalten werden, so daß die Probenpumpe 20 jetzt mit der gleichen Förderrate wie vorher die Lösungsmittelpumpe 78 Probenflüssigkeit fördert. Es kann aber bei der letzteren Betriebsweise auch Probenflüssigkeit und Lösungsmittel in einem bestimmten Verhältnis auf die Mischkammer 18 gegeben werden.

Zwischen der Mischkammer 18 und dem Reaktionsgefäß 44 sind Ventilmittel 96 angeordnet. Durch die Ventilmittel 96 ist in einem ersten Schaltzustand eine Verbindung zwischen der Mischkammer 18 und dem Reaktionsgefäß 44 herstellbar, wie dies vorstehend beschrieben wurde. In einem zweiten Schaltzustand ist durch die Ventilmittel 96 eine direkte Verbindung zwischen der Mischkammer 18 und einem Anschluß 98 herstellbar, der zu einem (nicht dargestellten) Zerstäuber des Plasma-Emissionsgerätes führt. Die Ventilmittel 96 können dabei ein Wegeventil sein oder aber auch ein Paar von einzeln ansteuerbaren Ventilen in der Leitung 56 bzw. vor dem Anschluß 98. Es kann daher mit ein und derselben Vorrichtung wahlweise eine Hydridbildung erfolgen. Diese ist nur für einige bestimmte Elemente möglich. Es kann aber auch Probe (gegebenenfalls mit Lösungsmittel oder Reagenz) unmittelbar in den Zerstäuber des Plasma-Emissionsgeräts geleitet werden.

Über den Anschluß 60 kann das Reaktionsgefäß 44 wahlweise auch in üblicher Weise an eine beheizte Meßküvette für die Atomabsorptions-Spektroskopie angeschlossen werden.

Das beschriebene Gerät ist daher in vielfältiger Weise anwendbar.

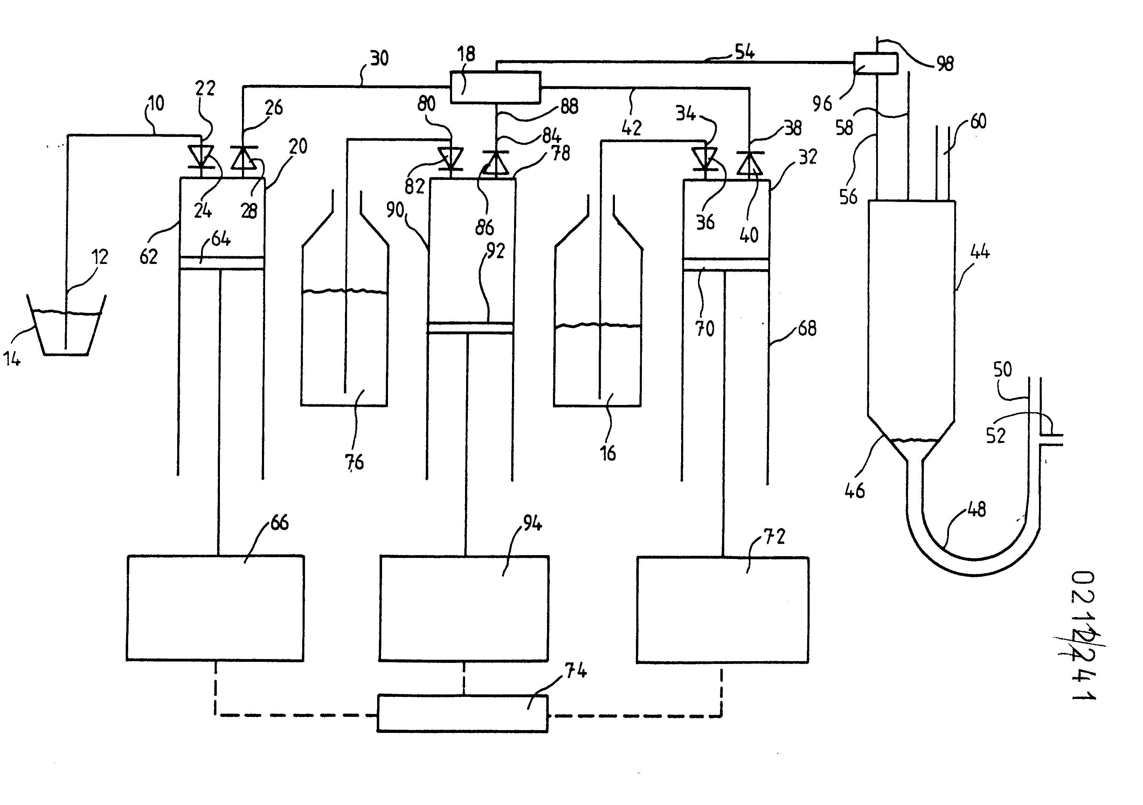

Patentansprüche

1. Vorrichtung zur Zufuhr einer Probe zu einem Plasma-Emissionsgerät, enthaltend

(a)   einen Probeneinlaß (10),

(b)   einen Reagenzvorratsbehälter (16),

(c)   eine Mischkammer (18),

(d)   eine Probenpumpe (20) mit einem Einlaß (22), der mit dem Probeneinlaß (10) verbunden ist, und mit einem Auslaß (26), der mit der Mischkammer (18) verbunden ist,

(e)   eine Reagenzpumpe (32) mit einem Einlaß (34), der mit dem Reagenzvorratsbehälter (16) verbunden ist, und einem Auslaß (38), der ebenfalls mit der Mischkammer (18) verbunden ist, und

(f)   ein Reaktionsgefäß (44), das mit der Mischkammer (18) in Verbindung steht, in das ein Schutzgasstrom einleitbar ist und das einen Ausgangsanschluß (60) zur Verbindung mit dem Plasma-Emissionsgerät aufweist,

dadurch gekennzeichnet, daß

(g) die Probenpumpe (20) und die Reagenzpumpe (32) als in einer Richtung fördernde Kolbenpumpen ausgebildet sind,

(h) die Pumpenkolben (64,70) der Kolbenpumpen (20,32) durch Antriebsmotore (66,72) mit variablen Geschwindigkeiten antreibbar sind,

(i) die Geschwindigkeiten der Antriebsmotore (66,72) durch ein Betriebsweisensteuergerät (74) steuerbar sind, wobei

($i_1$) bei einer ersten Betriebsweise vorgegebene Mengen von Probe und Reagenz mit relativ hoher Geschwindigkeit der Pumpenkolben (64,70) von Proben- und Reagenzpumpe (20, 32) praktisch in einem Schub in die Mischkammer (18) gefördert werden und

($i_2$) bei einer zweiten Betriebsweise die Probe und das Reagenz mit relativ geringer Geschwindigkeit der Pumpenkolben (64,70) von Proben- und Reagenzpumpe (20,32) über einen längeren, gegenüber der Reaktionszeit von Probe und Reagenz langen Zeitraum hinweg kontinuierlich in die Mischkammer (18) gefördert werden.

2. Vorrichtung nach Anspruch 1, gekennzeichnet durch

(a) einen Lösungsmittelbehälter (76) zur Aufnahme eines reinen Lösungsmittels und

(b) eine Lösungsmittelpumpe (78) mit einem Einlaß (80), der mit dem Lösungsmittelbehälter (76) verbunden ist, und einem Auslaß (84), der ebenfalls mit der Mischkammer (18) verbunden ist, und

(c) einen weiteren Antriebsmotor (94), durch welchen ebenfalls gesteuert von dem Betriebsweisensteuergerät (74) der Pumpenkolben (92) der Lösungsmittelpumpe (78) mit variabler Geschwindigkeit antreibbar ist.

3. Vorrichtung nach Anspruch 2, dadurch gekennzeichnet, daß durch das Betriebsweisensteuergerät (74)

(a) in einer Betriebsweise die Antriebsmotore (72,94) der Pumpenkolben (70,92) von Reagenz- und Lösungsmittelpumpe (32,78) zum Antrieb der Pumpenkolben (70,92) mit relativ geringer Geschwindigkeit ansteuerbar sind, so daß über einen längeren Zeitraum hinweg kontinuierlich Reagenz und Lösungsmittel in die Mischkammer (18) gefördert werden, und

(b) in einer anderen Betriebsweise die Antriebsmotore (72,66 bzw. 94) der Pumpenkolben von Reagenz- und Probenpumpe (32, 20) und ggf. der Lösungsmittelpumpe (78) zum Antrieb der Pumpenkolben (70,64 bzw.

92) mit relativ geringer Geschwindigkeit ansteuerbar sind, wobei die Förderrate der Reagenzpumpe (32) die gleiche ist wie bei der ersteren Betriebsweise und die Förderrate der Probenpumpe (20) dem Betrag entspricht, um den die Förderrate der Lösungsmittelpumpe (78) gegenüber ihrer Förderrate bei der ersteren Betriebsweise vermindert ist, so daß über einen längeren Zeitraum hinweg kontinuierlich Reagenz und Probe und ggf. Lösungsmittel in der gleichen Gesamtrate wie bei der ersten Betriebsweise in die Mischkammer (18) gefördert wird.

4. Vorrichtung nach einem der Ansprüche 1 bis 3, dadurch gekennzeichnet, daß zwischen der Mischkammer (18) und dem Reaktionsgefäß (44) Ventilmittel (96) angeordnet sind, durch welche

(a) in einem ersten Schaltzustand eine Verbindung zwischen der Mischkammer (18) und dem Reaktionsgefäß (44) herstellbar ist und

(b) in einem zweiten Schaltzustand eine direkte Verbindung zwischen der Mischkammer (18) und einem Zerstäuber eines Plasma-Emissionsgerätes herstellbar ist.

5. Vorrichtung nach Anspruch 1, dadurch gekennzeichnet, daß das Reaktionsgefäß (44) wahlweise an eine beheizte Meßküvette für die Atomabsorptions-Spektroskopie anschließbar ist.

0212241